# EUROPÄISCHE PATENTSCHRIFT

(11) **EP 2 428 398 B1**
(45) Veröffentlichungstag und Bekanntmachung des Hinweises auf die Patenterteilung: **22.04.2015**
(21) Anmeldenummer: 11180118.9
(22) Anmeldetag: 06.09.2011
(51) Int. Cl.: B60P 7/08

(54) **Vorrichtung zur lösbaren Befestigung eines Haltegurts an einer Profilschiene in einem Transportfahrzeug**
Device for reversible fixing of a holding belt to a profile rail in a transport vehicle
Dispositif de fixation amovible d'une ceinture de retenue sur un rail de profilé dans un véhicule de transport

(30) Priorität: 14.09.2010 DE 102010045296
(43) Veröffentlichungstag der Anmeldung: 14.03.2012
(73) Patentinhaber: Sortimo International GmbH, 86441 Zumarshausen (DE)
(72) Erfinder: Matzke, Rudolf, 86470 Thannhausen (DE)
(74) Vertreter: Charrier, Rapp & Liebau

(56) Entgegenhaltungen:
- EP-A2- 1 216 884
- DE-A1- 2 435 803
- US-A- 3 178 790
- US-A- 5 020 948
- US-A1- 2004 195 900

## Beschreibung

Die Erfindung betrifft ein Regalsystem für ein Transportfahrzeug mit mindestens einer Profilschiene und einer Vorrichtung zur lösbaren Befestigung eines Haltegurts an der Profilschiene.

In Fahrzeugen für Handwerker, Monteure, Außendienstmitarbeiter oder in Werkstatt- bzw. anderen Transportfahrzeugen werden vielfach Regalsysteme zum sicheren und ordnungsgemäßen Transport von Werkzeugen, Ersatzteilen, und anderen Bedarfsartikeln eingebaut. Üblicherweise sind an derartigen Regalsystemen auch spezielle Halterungen für zusätzliche Verzurr- oder Haltegurte angebracht.

Aus der DE 20 2007 007 443 U1 ist ein System zum Halten von Lasten im Laderaum eines Transportfahrzeugs bekannt. Bei diesem bekannten System sind in stranggepressten Aluminiumprofilsschienen schlüsselförmige Öffnungen mit einem kreisrunden Öffnungsabschnitt und einem rechteckigen Schlitzabschnitt vorgesehen. In die Öffnungen der im Fahrzeuginnenraum befestigbaren Aluminiumprofilschienen kann eine in Figur 7 dieser Druckschrift gezeigte hakenförmige Gurthalterung eingesetzt und unter einen zwischen den Öffnungen befindlichen Zwischensteg herumgeführt werden, bis das freie Hakenende der hakenförmigen Gurthalterung aus der nächsten benachbarten Öffnung ragt. Diese einfach aufgebauten hakenförmigen Gurthalterungen sind jedoch ohne Zugbelastung nicht gesichert und können im unbelasteten Zustand daher leicht aus den Öffnungen fallen.

Aus der US 2004/0195900 A1 ist eine Vorrichtung zur lösbaren Befestigung eines Rückhaltegurts in einem Fahrzeug bekannt. Diese weit einen Grundkörper mit einem hakenförmigen Vorderteil zum Hintergreifen einer Gurthalterung und einen mit einem Querschlitz für die Aufnahme des Rückhaltegurts versehenen Rückteil auf. Um ein Lösen des hakenförmigen Vorderteils aus der Gurthalterung zu vermeiden, ist ein Druckstück vorgesehen, welches relativ zu dem Grundkörper beweglich ist und mittels einer Druckfeder in Richtung des hakenförmigen Vorderteils beaufschlagt wird. Das Druckstück umschließt den Grundkörper teilweise, so dass der Grundkörper in dem Druckstück geführt ist. Durch seitliche Flansche des Druckstücks wird der hakenförmige Vorderteil des Grundkörpers verschlossen und somit die Gurthalterung sicher mit der Vorrichtung verbunden.

Aus der EP 1 216 884 A2 ist eine Vorrichtung zur lösbaren Anbringung eines Gehäuses eines Laderaumabdeckrollos oder Sicherheitsnetzes an einer Fahrzeugwand, insbesondere der Rückseite einer Kfz-Fondlehne, bekannt. An dem Gehäuse sind Befestigungselemente angeordnet, die gemeinsam mit fahrzeugseitig angeordneten Gegenelementen ein Drehlager für eine Schwenkbewegung des Gehäuses relativ zur Fahrzeugwand ausbilden, so dass während der Montage durch Aufnahme eines Teils der Schwerkraft der Vorrichtung geringere Kraftanstrengungen notwendig sind.

Aus der DE 24 35 803 A1 ist ein Ankerschienenbeschlag für Spannbänder bekannt, der als ein einstückiger Bügel von U-Form mit entgegengesetzt gerichteten, abgewinkelten, in eine Ankerschienenöffnung einführbaren Stützflächen ausgebildet ist. Zur Sicherung des Ankerschienenbeschlags an der Ankerschienenöffnung ist an einem der Schenkel des Ankerschienenbeschlags eine in Schienenrichtung wirkende und sich im Betriebszustand gegen eine Kante der Schienenöffnung abstützende Blattfeder befestigt.

Aus der US 3 178 790 A ist eine lösbare Ladegutsicherung in Form eines Befestigungsmittels für Spanngurte an der Wand eines Transportfahrzeugs bekannt. Das Befestigungsmittel besteht aus zwei hakenförmigen Teilen, die mittels einer Feder gegeneinander in entgegengesetzte Richtungen vorgespannt sind, um eine an der Wand des Transportfahrzeugs befestigte Schiene haltend zu hintergreifen.

Aufgabe der Erfindung ist es, ein Regalsystem zu schaffen, das eine einfache und sicherere Befestigung von Haltegurten ermöglicht.

Diese Aufgabe wird durch ein Regalsystem mit den Merkmalen des Anspruchs 1 gelöst. Zweckmäßige Ausgestaltungen und vorteilhafte Weiterbildungen der Erfindung sind in den Unteransprüchen angegeben.

Das erfindungsgemäße Regalsystem umfasst mindestens eine Profilschiene und eine Vorrichtung zur lösbaren Befestigung eines Haltegurts an der Profilschiene. Die Profilschiene enthält einen Hohlraum und mehrere durch Trennstege voneinander getrennte Schlitze und die Vorrichtung einen Grundkörper, der ein Rückteil mit einem Querschlitz zur Aufnahme des Haltegurts und ein hakenförmiges Vorderteil zur Einführung in einen der Schlitze und zum Hintergreifen eines der Trennstege aufweist. An dem Rückteil des Grundkörpers ist ein durch eine Druckfeder in Richtung des hakenförmigen Vorderteils beaufschlagtes Druckstück zur gesicherten Halterung des Grundkörpers an der Profilschiene angeordnet. Durch das Drucksstück kann das hakenförmige Vorderteil in einer den Trennsteg der Profilschiene hintergreifenden Verriegelungsstellung gesichert gehalten werden, wodurch der Grundkörper gegen Herausfallen gesichert ist. Die Vorrichtung ist je nach Bedarf einfach montier- und demontierbar und ermöglicht eine sichere Befestigung von zusätzlichen Halte- bzw. Verzurrgurten

Zweckmäßigerweise wird das Druckstück durch die Druckfeder in Richtung eines inneren Anlagebereichs des hakenförmigen Vorderteils gedrückt. Dadurch kann das hakenförmige Vorderteil von hinten gegen den Trennsteg der Profilschiene gedrückt und in einer Verriegelungsstellung gehalten werden.

In einer weiteren zweckmäßigen Ausführung ist das Druckstück in einem Längsschlitz des Grundkörpers verschiebbar geführt. Das Druckstück kann in einer bevorzugten Ausführung außerdem drehbar in dem Längsschlitz angeordnet sein. Dadurch kann das Druckstück nicht nur verschoben werden, sondern kann sich bei einer während der Montage oder Demontage erfolgenden Bewegung entlang einer Profilschiene mitdrehen, wodurch die Handhabung vereinfacht und der Verschleiß verringert wird.

Zur Halterung der das Druckstück beaufschlagenden Druckfeder kann in dem Längschlitz ein Haltezapfen angeordnet sein, auf den die vorzugsweise als Schraubenfeder ausgebildete Druckfeder aufgesteckt wird.

In einer sowohl fertigungs- als auch montagetechnisch vorteilhaften Ausführung kann das Druckstück aus zwei miteinander verbunden, scheibenförmigen Drehteilen bestehen. Die beiden Drehteile können z.B. über einen an einem der beiden Drehteile angeordneten Gewindezapfen und eine entsprechende Gewindebohrung an dem anderen Drehteil miteinander verbunden sein.

Die beiden Drehteile können außerdem durch seitliche Abdeckung aus Kunststoff oder dgl. abgedeckt sein, um einen Zugriff zu den Drehteilen oder deren unerwünschte Betätigung verhindern.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: einen Teil eines Regalsystems für Transportfahrzeuge mit einem Pfostenprofil, einem Rahmenprofil und einer Vorrichtung zur lösbaren Befestigung eines Haltegurts;
- **Figur 2**: eine Schnittansicht entlang der Linie E-F von Figur 1;
- **Figur 3**: eine Schnittansicht entlang der Linie A-B von Figur 1;
- **Figur 4**: eine Darstellung der Einzelteile der in Figur 1 gezeigten Vorrichtung zur lösbaren Befestigung des Haltegurts;
- **Figur 5**: die Vorrichtung zur lösbaren Befestigung des Haltegurts im zusammengebauten Zustand;
- **Figur 6**: eine als Pfostenprofil eingesetzte Profilschiene mit der Vorrichtung zur Befestigung des Haltegurts und
- **Figur 7**: eine Darstellung des Ablaufs zur Montage der Vorrichtung für die Befestigung des Haltegurts an der in Figur 6 gezeigten Profilschiene.

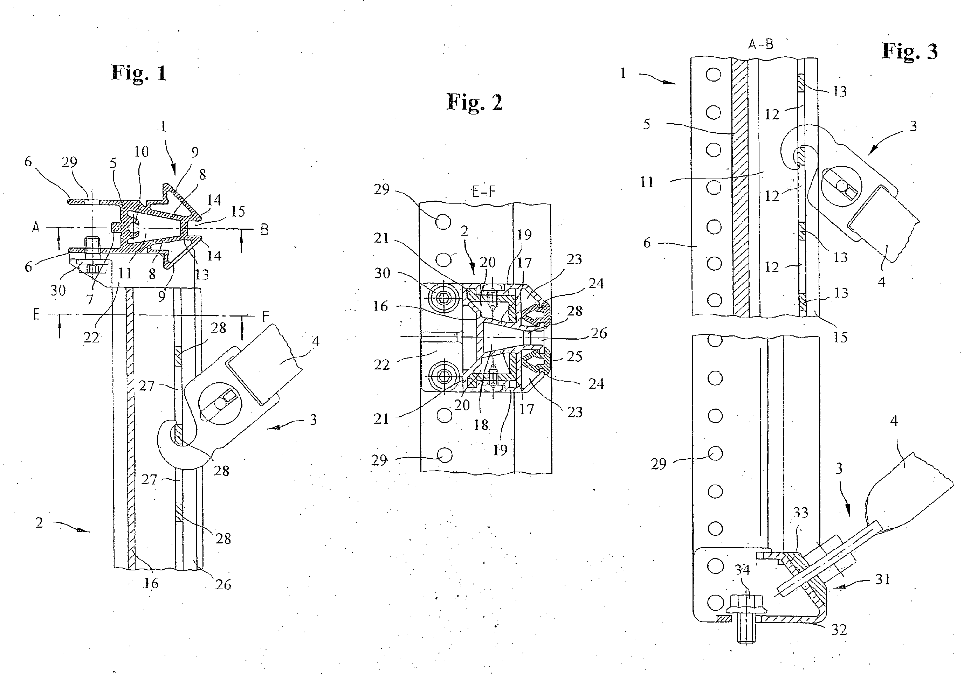

In Figur 1 ist ein Teil einer Rahmenkonstruktion eines innerhalb eines Transport- oder Werkstattfahrzeugs angeordneten Regalsystems mit einer als Pfostenprofil dienenden ersten Profilschiene 1, einer mit der ersten Profilschiene 1 fest verbundenen und als Rahmenprofil dienenden zweiten Profilschiene 2 und einer Vorrichtung 3 zur lösbaren Befestigung eines Verzurr- oder Haltegurts 4 oder einer anderen Verzurr- bzw. Halteeinrichtung an den Profilschienen gezeigt.

Wie aus Figur 1 und der Schnittansicht von Figur 3 hervorgeht, weist die als Pfostenprofil dienende erste Profilschiene 1 einen im Querschnitt U-förmigen hinteren Bereich mit einem durchgehenden Quersteg 5 und zwei parallelen hinteren Seitenstegen 6 auf. An der zu den Seitenstegen 6 weisenden hinteren Seite des Querstegs 5 ist zwischen den beiden Seitenstegen 6 ein zusätzlicher Verstärkungssteg 7 angeformt. An der gegenüberliegenden vorderen Seite des Querstegs 5 sind zwei entgegengesetzt schräge, nach vorne aufeinander zulaufende innere Seitenstege 8 mit im Wesentlichen dreiecksförmigen äußeren Seitenteilen 9 und einem zwischen den Seitenstegen 8 angeordneten Schraubkanal 10 angeformt. Die beiden Seitenstege 8 bilden die seitliche Begrenzung eines trapezförmigen Hohlraums 11, dessen längere Hinterseite durch den Quersteg 5 begrenzt wird. Die kürzere Vorderseite des Hohlraums 11 wird gemäß Figur 3 durch mehrere über Schlitze 12 voneinander beabstandete Trennstege 13 im Nutgrund einer an der Vorderseite des Profilschiene 1 angeordneten Einführungsnut 15 gebildet. Die im Querschnitt rechteckige Einführungsnut 15 ist zwischen den vorderen Enden 14 der beiden Seitenteile 9 an der Vorderseite der Profilschiene 1 vorgesehen.

Auch bei der in Figur 2 im Querschnitt gezeigten zweiten Profilschiene 2, die als horizontales Rahmenprofil des innerhalb eines Transportfahrzeug angeordneten Regalsystems dient, sind an der Vorderseite eines Querstegs 16 zwei nach vorne schräg aufeinander zulaufende innere Seitenstege 17 zur seitlichen Begrenzung eines im Querschnitt trapezförmigen Hohlraums 18 angeformt. Im Unterschied zur ersten Profilschiene 1 sind die beiden an der Außenseite der Seitenstege 17 angeformten Seitenteile 19 der zweiten Profilschiene 2 derart ausgebildet, dass sie jeweils einen seitlichen, zur Seite geschlossenen Aufnahmekanal 20 für winkelförmige Halte- oder Einbauteile 21 eines Verbindungsstücks 22 und einen nach vorne offenen vorderen Aufnahmekanal 23 mit einer vorderen Öffnung 24 bilden. Die vorderen Öffnungen 24 können durch einsteckbare Schutzprofilleisten 25 abgedeckt werden. Auch hier ist zwischen den vordern Enden der beiden am der Vorderseite abgeschrägten Seitenteile 19 eine im Querschnitt rechteckige Einführungsnut 26 vorgesehen. Die hintere längere Seite des Hohlraums 18 wird durch den Quersteg 16 begrenzt, während die schmalere Vorderseite des Hohlraums 18 gemäß Figur 1 ebenfalls durch mehrere über Schlitze voneinander beabstandete Trennstege 28 im Nutgrund der Einführungsnut 26 gebildet wird.

Die ersten und zweiten Profilschienen 1 und 2 sind zweckmäßigerweise als Hohlprofile aus Aluminium oder einem anderen geeigneten Material im Strangpressverfahren hergestellt. In den beiden hinteren Seitenstegen 6 der ersten Profilschiene 1 sind Bohrungen 29 zur festen Verbindung mit den in Figur 2 gezeigten Verbindungsstücken 22 mit Hilfe von Schrauben 30 vorgesehen.

In Figur 3 ist außer der das Pfostenprofil bildenden vertikalen Profilschiene 1 auch eine als Bodenschiene dienende dritte Profilschiene 31 gezeigt. Die hier als Blechbiegeteil ausgeführte Profilschiene 31 weist einen unteren Auflageschenkel 32 und einen schräg nach oben verlaufenden Haltesschenkel 33 auf. Über Schrauben 34 ist der untere Auflageschenkel 32 der Profilschiene 31 auf dem Boden eines Transportfahrzeugs befestigbar. Wie bei der Profilschiene 1 sind auch in dem Halteschenkel 33 der dritten Profilschiene 31 mehrere durch Schlitze 12 voneinander beabstandete Trennstege vorgesehen.

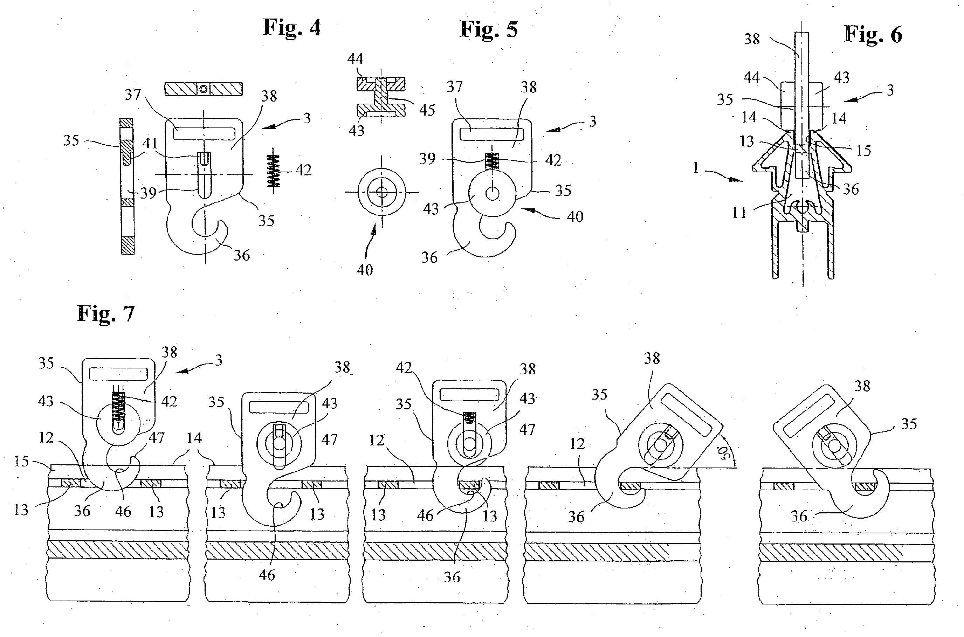

Die in den Figuren 4 und 5 im auseinander- und zusammengebauten Zustand gezeigte Vorrichtung 3 zur lösbaren Befestigung eines Haltegurts 4 oder einer anderen Verzurr- bzw. Halteeinrichtung an den vorstehend beschriebenen Profilschienen enthält einen als Zinkdruckgussteil ausgeführten Grundkörper 35 mit einem hakenförmigen Vorderteil 36 und einem mit einem Querschlitz 37 versehenen Rückteil 38. In dem Querschlitz 37 am Ende des Rückteils 38 kann ein z.B. als Textilgurt ausgeführter Haltegurt 4 angebracht sein. In einem Längsschlitz 39 zwischen dem Querschlitz 37 und dem hakenförmigen Vorderteil 36 ist im Rückteil 38 ein als Sicherungselement dienendes Druckstück 40 verschiebbar geführt. Auf einem Haltezapfen 41 im Inneren des Längsschlitzes 39 sitzt eine hier als Schraubenfeder ausgeführte Druckfeder 42, durch die das Druckstück 40 in Richtung des hakenförmigen Vorderteils 36 gedrückt wird. Bei der gezeigten Ausführung besteht das Druckstück 40 aus zwei scheibenförmigen Drehteilen 43 und 44, welche über einen an dem einen Drehteil 43 angeordneten Gewindezapfen 45 miteinander verbunden sind.

Anhand der Figur 7 wird die Montage der vorstehend beschriebenen Vorrichtung 3 an einer in Figur 6 gezeigten Profilschiene 1 erläutert.

Zur Montage der Vorrichtung 3 kann das hakenförmige Vorderteil 36 über die in Figur 6 gezeigte Einführungsnut 15 an der Vorderseite der Profilschiene 1 eingeführt und gemäß Figur 7 in einen Schlitz 12 zwischen den Trennstegen 13 eingesteckt werden. Die Breite der Einführungsnut 15 an der Profilschiene 1 ist an die Dicke des hakenförmigen Vorderteils 36 am Grundkörper 35 angepasst, so dass das Vorderteil 36 beim Einstecken in die Einführungsnut 15 seitlich geführt wird. Der Abstand zwischen den Trennstegen 13 ist auf die Breite des hakenförmigen Vorderteils 36 abgestimmt, so dass dieses mit einem seitlichen Spiel in den Schlitz 12 zwischen den Trennstegen 13 eingesteckt werden kann. Bei der Einführung des hakenförmigen Vorderteils 36 gelangen die beiden Drehteile 43 und 44 des Druckstücks 40 zur Anlage an den vorderen Enden 14 der Seitenteile 15. Das Druckstück 40 ist derart angeordnet, dass es zur Verschiebung des nach innen gebogenen freien Endes 46 des hakenförmigen Vorderteils 36 unter den Trennsteg 13 gemäß der zweiten Darstellung auf der linken Seite von Figur 7 entgegen der Kraft der Druckfeder 42 in Richtung des hinteren Endes des Rückteils 38 verschoben werden muss. Wird dann der Grundkörper 35 aus dieser Stellung heraus nach rechts verschoben und losgelassen, wird der Grundkörper 35 durch die mittels der Druckfeder 42 in Richtung eines inneren Anlagebereichs 46 des hakenförmigen Vorderteils 36 beaufschlagten Drehteile 43 und 44 des Druckstücks 40 nach außen gedrückt, bis der Trennsteg 13 von dem hakenförmigen Vorderteil 36 umgriffen wird und das nach innen gebogene freie Ende 47 des hakenförmigen Vorderteils 36 gemäß der mittleren Darstellung von Figur 7 aus dem nächsten Schlitz 12 vorsteht. In dieser Verriegelungsstellung ist die Vorrichtung 3 gegen unerwünschtes Herausfallen gesichert fixiert.

Wie aus den beiden rechten Darstellungen der Figur 7 hervorgeht, kann der Grundkörper 35 der Vorrichtung 3 in der Verriegelungsstellung um 40° nach rechts und links verschwenkt werden, ohne dass die Verriegelungsstellung aufgehoben wird. Dadurch kann der Grundkörper 35 für eine schräge Anordnung der Haltegurte auch in einer gekippten Stellung sicher gehalten werden. Um einen unerwünschten Zugriff zu den beiden Drehteilen 43 und 44 zu verhindern, können diese durch hier nicht dargestellte seitliche Abdeckungen aus Kunststoff oder dgl. abgedeckt sein.

Zur Demontage der Vorrichtung 3 muss nur der Grundkörper 35 entgegen der Kraft der durch die Druckfeder 42 beaufschlagten Drehteile 43 und 44 des Druckstücks 40 nach innen gedrückt und anschließend nach links verschoben werden. Dann gelangt der hakenförmige Vorderteil 36 außer Eingriff mit dem Trennsteg 13 und die Vorrichtung 3 kann entnommen werden.

## Patentansprüche

1. Regalsystem für ein Transportfahrzeug mit mindestens einer Profilschiene (1; 2; 31) und einer Vorrichtung (3) zur lösbaren Befestigung eines Haltegurts (4) an der Profilschiene (1; 2; 31), wobei die Profilschiene (1; 2; 31) einen Hohlraum (11; 18) und mehrere durch Trennstege (13; 28) voneinander getrennte Schlitze (12; 27) und die Vorrichtung (3) einen Grundkörper (35) enthält, der ein Rückteil (38) mit einem Querschlitz (37) zur Aufnahme des Haltegurts (4) und ein hakenförmiges Vorderteil (36) zur Einführung in einen der Schlitze (12; 27) und zum Hintergreifen eines der Trennstege (13; 28) aufweist, wobei an dem Rückteil (38) des Grundkörpers (35) ein durch eine Druckfeder (42) in Richtung des hakenförmigen Vorderteils (36) beaufschlagtes Druckstück (40) zur gesicherten Halterung des Grundkörpers (35) an der Profilschiene (1, 2; 31) angeordnet ist.

2. Regalsystem nach Anspruch 1, **dadurch gekennzeichnet, dass** die Profilschiene (1; 2) zwei von einem Quersteg (5) nach vorne aufeinander zulaufende Seitenstege (9) zur seitlichen Begrenzung des Hohlraums (11; 18) enthält.

3. Regalsystem nach Anspruch 2, **dadurch gekennzeichnet, dass** an der Rückseite des Querstegs (5) ein Verstärkungssteg (7) angeformt ist.

4. Regalsystem nach einem der Ansprüche 1 bis 3, **dadurch gekennzeichnet, dass** an der Vorderseite der Profilschiene (1; 2) eine im Querschnitt rechteckige Einführungsnut (15; 26) angeordnet ist.

5. Regalsystem nach Anspruch 4, **dadurch gekennzeichnet, dass** die Breite der Einführungsnut (15; 26) an der Profilschiene (1) an die Dicke des hakenförmigen Vorderteils (36) am Grundkörper (35) angepasst ist, so dass das Vorderteil (36) beim Einstecken in die Einführungsnut (15; 26) seitlich geführt wird.

6. Regalsystem nach Anspruch 4 oder 5, **dadurch gekennzeichnet, dass** die Trennstege (13; 28) und die Schlitze (12; 27) in dem Nutgrund der Einführungsnut (15; 26) angeordnet sind.

## Claims

1. Shelving system for a transport vehicle with at least one profile rail (1; 2; 31) and a device (3) for detachable fastening of a retaining strap (4) to the profile rail (1; 2; 31), wherein the profile rail (1; 2; 31) comprises a cavity (11; 18) and a plurality of slots (12; 27) separated from one another by separating elements (13; 28) and the device (3) comprises a base unit (35) which exhibits a rear part (38) with a transverse slot (37) for receiving the retaining strap (4) and a hook-shaped front part (36) for introduction into one of the slots (12; 27) and for gripping behind one of the separating elements (13; 28), wherein a thrust element (40) subjected to the action of a compression spring (42) in the direction of the hook-shaped front part (36) is arranged on the rear part (38) of the base unit (35) for secure attachment of the base unit (35) to the profile rail (1; 2; 31).

2. Shelving system according to claim 1, **characterised in that** the profile rail (1; 2) comprises two side elements (9) which run together towards the front from a transverse element (5) to bound the cavity (11; 18) laterally.

3. Shelving system according to claim 2, **characterised in** a reinforcing element (7) is formed on the rear side of the transverse element (5).

4. Shelving system according to one of claims 1 to 3, **characterised in that** a guide channel (15; 26) of rectangular cross-section is arranged on the front side of the profile rail; (1; 2).

5. Shelving system according to claim 4, **characterised in that** the width of the guide channel (15; 26) on the profile rail (1) is matched to the thickness of the hook-shaped front part (36) on the base unit (35) so that the front part (36) is guided laterally when it is introduced into the guide channel (15; 26).

6. Shelving system according to claim 4 or 5, **characterised in that** the separating elements (13; 28) and the slots (12; 27) are arranged in the bottom of the guide channel (15; 26).

## Revendications

1. Système d'étagères pour un véhicule de transport avec au moins un rail profilé (1 ; 2 ; 31) et un dispositif (3) pour la fixation détachable d'une sangle de retenue (4) sur le rail profilé (1 ; 2 ; 31), le rail profilé (1 ; 2 ; 31) contenant un espace creux (11 ; 18) et plusieurs fentes (12 ; 27) séparées les unes des autres par des nervures de séparation (13 ; 28) et le dispositif (3) contenant un corps de base (35) qui présente une partie arrière (38) avec une fente transversale (37) pour la réception de la sangle de retenue (4) et une partie avant en forme de crochet (36) pour l'introduction dans l'une des fentes (12 ; 27) et pour la prise arrière de l'une des nervures de séparation (13 ; 28), une pièce de pression (40) sollicitée par un ressort de pression (42) en direction de la partie avant (36) en forme de crochet étant agencée sur la partie arrière (38) du corps de base (35) pour maintenir le blocage du corps de base (35) sur le rail profilé (1, 2 ; 31).

2. Système d'étagère selon la revendication 1, **caractérisé en ce que** le rail profilé (1 ; 2) contient deux nervures latérales (9) s'étendant vers l'avant, depuis une nervure transversale (5), l'une vers l'autre, pour la délimitation latérale de l'espace creux (11 ; 18).

3. Système d'étagère selon la revendication 2, **caractérisé en ce qu'**une nervure de renforcement (7) est formée sur le côté arrière de la nervure transversale (5).

4. Système d'étagères selon l'une quelconque des revendications 1 à 3, **caractérisé en ce qu'**une rainure d'introduction (15 ; 26) de section rectangulaire est agencée sur le côté avant du rail profilé (1 ; 2).

5. Système d'étagère selon la revendication 4, **caractérisé en ce que** la largeur de la rainure d'introduction (15 ; 26) sur le rail profilé (1) est adaptée à l'épaisseur de la partie avant en forme de crochet (36) sur le corps de base (35) de manière à ce que la partie avant (36) soit guidée latéralement lors de l'enfichage dans la rainure d'introduction (15 ; 26).

6. Système d'étagère selon la revendication 4 ou 5, **caractérisé en ce que** les nervures de séparation (13 ; 28) et les fentes (12 ; 27) sont agencées dans le fond de la rainure d'introduction (15 ; 26).
